# EUROPEAN PATENT SPECIFICATION

(11) **EP 3 571 031 B1**
(45) Date of publication and mention of the grant of the patent: **13.11.2024**
(21) Application number: 18702937.6
(22) Date of filing: 19.01.2018
(51) Int. Cl.: B27N 3/18

(54) **COOLING TURNER**
KÜHLUNGSWENDER
TOURNEUR DE REFROIDISSEMENT

(30) Priority: 19.01.2017 FI 20175041
(43) Date of publication of application: 27.11.2019
(73) Proprietor: Dieffenbacher Panelboard Oy, 15560 Nastola (FI)
(72) Inventor: MÄNNIKKÖ, Ari, 15561 Nastola (FI)
(74) Representative: Hartdegen, Helmut
(86) International application number: PCT/EP2018/051268
(87) International publication number: WO 2018/134336

(56) References cited:
- CN-Y- 2 585 528
- DE-A1- 2 120 351
- DE-T5- 112015 000 724
- US-A- 5 088 720

## Description

The object of the present invention is a cooling turner for cooling wood-based boards or board stacks according to claim 1.

Wood-based boards, such as chipboards, MDF (Medium-Density Fibreboard) boards or OSB (Oriented Strand Board) boards, are manufactured by hot-pressing wood fibers and binder agent into an integral board with a hot press, after which the boards are sawn to the desired lengths, preferably with a moving saw, i.e. without stopping the boards. After this the boards are transported, singly or in stacks of two or more boards, to a cooling turner, in which the boards cool before stacking.

A cooling turner is an elongated steel structure having a length of typically 6-12 m. In the chipboard, MDF board and OSB board industry, a drum-like steel pipe is generally used as the body structure of a cooling turner, onto which pipe the necessary number of large-diameter flanges are rigidly fixed by welding, which flanges are for fastening the radial support prongs. The boards to be cooled are brought into the intervals between the support prongs. Typically, there are 70-90 intervals, i.e. places for board, between support prongs. The distance of the flanges, and likewise of consecutive prongs, from each other in the longitudinal direction of the cooling turner is generally approx. 0.4-0.75 m.

Each board is in the cooling turner for the duration of a turning movement of 180°. The turning movement occurs over the top route, in which case the boards stay in the cooling turner without separate support parts. There can be one or more cooling turners consecutively, in which case the boards are transferred to further processing, or to the next cooling turner and there make a 180° turning movement before removal from the cooling turner.

One cooling turner known in the art is presented in Finnish patent 125432 B.

The flanges of the body are thus conventionally fastened to a drum-like body structure by welding. Welding the flanges onto the center pipe is difficult owing to the large diameter of the flanges and their short distance from each other. A welder finds it difficult to reach a good welding position in the cramped space. In addition, flanges rigidly fixed by welding increase the diameter of the body of the rotating component so that it is unsuitable for transportation by intermodal container. In this case the only viable means of transport are expensive and therefore appreciably raise the price of the delivery.

The welding of the parts of the flanges to the center pipe of the body is manual work, which is difficult to make more efficient with welding jigs or welding automation. Without a proper welding jig, precise positioning of the parts of the flanges is difficult and slow. A welding jig made for the entire structure would also be very expensive and, owing to its large size, difficult to use.

CN2585528Y discloses a cooling turner with a rotary frame disk for panel turnover machines. The rotary frame disk is formed by two semicircular supporting disks and two semicircular cover disks and a plurality of inserting components which can be arranged at the same angle and inserted with supporting frame rods clamped and positioned between the left and the right disk surfaces.

The aim of the present invention is to provide a new type of cooling turner which would be modular and compact, and which would be efficiently manufacturable and transportable despite its large size. The cooling turner according to the invention is defined in claim 1.

Alternative methods for installing sector modules of a cooling turner are defined in claims 10 and 11.

Two or more sector parts of a cooling turner that are consecutive in the longitudinal direction are formed into one sector module.

The sector parts of a sector module are connected to each other with one or more rods. There can preferably be 4-16 sector parts in a sector module.

One of the advantages of the invention that can be mentioned is that the center pipe of the body is easy to manufacture and inexpensive to transport without large flanges. Modular sector modules are cheaper to fabricate than the structure known in the art because the welding work is efficient and ergonomic. The jigs to be used in the welding are inexpensive and precise owing to their smaller size. The sector modules and center pipe are easier to surface-treat and paint than a conventional structure. Furthermore, sector modules can be manufactured and transported inexpensively as high-volume series. A body structure suitable in diameter and length for transportation by intermodal container reduces transport costs compared to prior art.

Installation of the sector modules is only performed at the installation site, unlike in prior-art devices in which the flanges are prewelded at the factory. There are typically either 6 or 12 modules. Installation is, however, rather fast and the sector modules are lightweight. The module presented in the drawings weighs 560 kg, i.e. it can be lifted from an intermodal container into its position with a hoist operated on a truck.

In the following, the invention will be described in more detail by the aid of some preferred embodiments with reference to the attached drawings, wherein
- Fig. 1: presents a cooling turner according to the invention.
- Fig. 2: presents the drum-like center pipe of the cooling turner.
- Fig. 3: presents the flanges fastened onto the center pipe.
- Fig. 4: presents one sector module, from which the flanges are assembled.

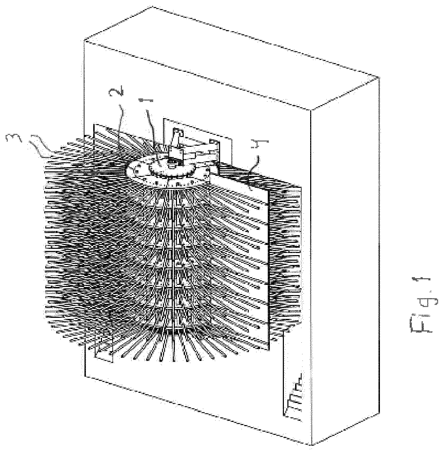

Fig. 1 thus presents a cooling turner of a chipboard, MDF board and OSB board factory, the body of which cooling turner comprises a drum-like center pipe 1 and flanges fastened to it, which flanges are composed of sector modules 2. Support prongs 3 are fastened to the flanges, 8 units of which flanges being fastened consecutively to the center pipe in the embodiment presented by Fig. 1. The distance between flanges is preferably approx. 0.4 - 0.7 m.

Spaces form in the intervals between support prongs 3, into which spaces the boards 4 to be cooled are fed one at a time or in batches. In this cooling turner the boards cool until the cooling turner has rotated 180°, after which the board or boards are removed from the cooling turner. There are generally 70-90 spaces, into which the boards can be fed, in a turning distance of 180°. A cooling turner is stopped always when a board is fed in and/or when a board is removed from the cooling turner. Cooling of the boards generally occurs at the temperature of the indoor air. In addition, it is possible to add some external cooling device to cool the boards.

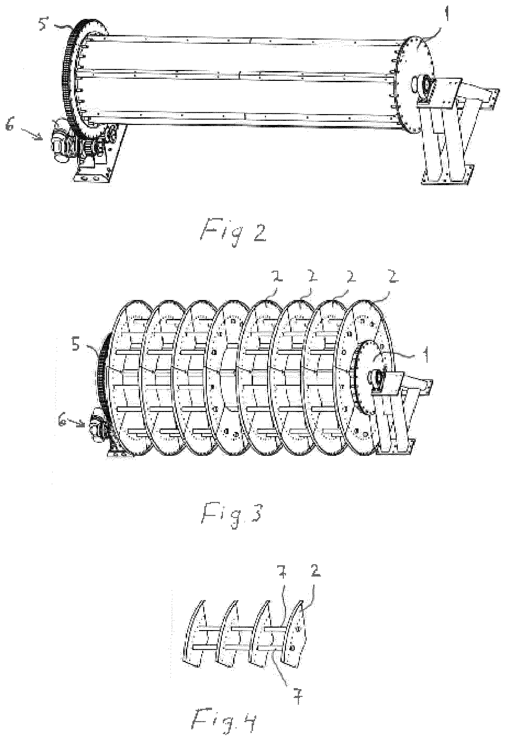

Fig. 2 presents a drum-like, steel-structured center pipe 1. On the left-hand end of the center pipe 1 is an idler wheel 5, the outer rim of which is toothed and which is rotated with a separate actuator via gearing 6. On the right-hand end of Fig. 2 the center pipe is supported on bearings so as to be freely rotatable.

In Fig. 3, flanges have been fastened onto the center pipe 1. The flanges can be assembled from sector modules 2. In Fig. 2, one sector module is marked with the reference number 2. In this case a sector module thus comprises four sector parts that are consecutive in the longitudinal direction of the cooling turner. The number of sector parts is not, however, restricted but instead can typically be any number between 4-16. Each sector part of a sector module is fastened to the center pipe with a bolted connection. The sector parts of a sector module are connected to each other with rods 7. In this case there are 2 units of rods 7 side-by-side. The number of them can, however, vary between e.g. 1-4. The joint between the rods and the flange parts can be welded.

The flange structure of the body is divided into at least three sectors, in which case one sector covers less than 180°. For example, a flange divided into three sectors is formed from 120° sector modules, in which case the extreme dimensions of a sector module as viewed on a plane at a right angle to the axis of rotation are essentially smaller than what the diameter of the whole body would be, which substantially facilitates transportation from the factory to the installation site.

By dividing the body flange into a sufficient number of sectors, a size of module suited to container transportation in terms of the aforementioned extreme dimensions is achieved. In the embodiment presented in the drawings, the size of one sector is 60°. This type of module is efficiently, precisely and economically manufacturable with a welding jig developed for it.

When the length of the center pipe 1 exceeds the length of an intermodal container, which is generally 40 feet, it can be divided into two parts with a flange joint, preferably into one longer and one shorter part. In this way, both the sector modules 2 and the center pipe 1 are adaptable to be suited to container transportation.

It is obvious to the person skilled in the art that the invention is not limited to the embodiments described above, but that it can be varied within the scope of the claims presented below.

Although the preceding refers to rods 7, it must be understood that it can be any elongated structural element whatsoever, such as an axle, beam, round pipe or rectangular pipe.

Furthermore, although in the preceding it is explained that the flanges are fastened to the center pipe with bolted connections, it is also possible to make the connections by welding at the installation site.

One or more sector modules 2 are transportable in a seaborne intermodal container of standard size. The sector modules 2 are also installable in a seaborne intermodal container partly interleaved with each other for adjusting transport space.

## Claims

1. A cooling turner for cooling wood-based boards or board stacks, which cooling turner comprises a rotatable center pipe (1), flanges fastened to it and also support prongs (3) fastened to the flanges for supporting the boards (4) or board stacks during cooling, wherein each flange is formed from at least three sector parts, and the sector parts are fastened to the center pipe (1), wherein two or more sector parts that are consecutive in the longitudinal direction of the cooling turner are formed into one sector module (2), and sector parts of a sector module (2) are connected to each other with one or more rods (7).

2. Cooling turner according to claim 1, **characterized in that** there are 4-16 sector parts in a sector module (2).

3. Cooling turner according to claim 1, **characterized in that** the sector parts are connected to each other with two rods (7) that are parallel to each other.

4. Cooling turner according to any of claims 1 - 3, **characterized in that** each flange is divided into six sectors, in which case each sector extends around 60° of the circumference of the flange.

5. Cooling turner according to any of claims 1 - 4, **characterized in that** the center pipe is formed from two parts connectable in the longitudinal direction.

6. Cooling turner according to claim 5, **characterized in that** the connectable parts are of different lengths.

7. Cooling turner according to claim 3 or 6, **characterized in that** the parts are connected together with a flange joint.

8. Cooling turner according to any of claims 1 - 7, **characterized in that** one or more sector modules (2) are transportable in a seaborne intermodal container of standard size.

9. Cooling turner according to claim 8, **characterized in that** the sector modules (2) are installable in a seaborne intermodal container partly interleaved with each other for adjusting transport space.

10. Method for installing sector modules of a cooling turner according to claim 1, **characterized in that** the sector parts are fastened to the center pipe (1) with bolted connections at the installation site.

11. Method for installing sector modules of a cooling turner according to claim 1 , **characterized in that** the sector parts are fastened to the center pipe (1) by welding at the installation site.

## Patentansprüche

1. Kühlsternwender zum Kühlen von Holzwerkstoffplatten oder Plattenstapeln, wobei der Kühlsternwender ein drehbares Mittelrohr (1), daran befestigte Flansche sowie an den Flanschen befestigte Stützzinken (3) zum Stützen der Platten (4) oder Plattenstapel während des Kühlens umfasst, wobei jeder Flansch aus mindestens drei Sektorteilen gebildet ist und die Sektorteile an dem Mittelrohr (1) befestigt sind, wobei zwei oder mehr Sektorteile, die in der Längsrichtung des Kühlstemwenders aufeinanderfolgend sind, zu einem Sektormodul (2) gebildet sind und Sektorteile eines Sektormoduls (2) durch eine oder mehrere Stangen (7) miteinander verbunden sind.

2. Kühlsternwender nach Anspruch 1, **dadurch gekennzeichnet, dass** sich 4-16 Sektorteile in einem Sektormodul (2) befinden.

3. Kühlsternwender nach Anspruch 1, **dadurch gekennzeichnet, dass** die Sektorteile durch zwei Stangen (7), die parallel zueinander verlaufen, miteinander verbunden sind.

4. Kühlsternwender nach einem der Ansprüche 1-3, **dadurch gekennzeichnet, dass** jeder Flansch in sechs Sektoren unterteilt ist, wobei sich jeder Sektor über etwa 60° des Umfangs des Flansches erstreckt.

5. Kühlsternwender nach einem der Ansprüche 1-4, **dadurch gekennzeichnet, dass** das Mittelrohr aus zwei Teilen, die in der Längsrichtung verbindbar sind, gebildet ist.

6. Kühlsternwender nach Anspruch 5, **dadurch gekennzeichnet, dass** die verbindbaren Teile unterschiedlich lang sind.

7. Kühlsternwender nach Anspruch 3 oder 6, **dadurch gekennzeichnet, dass** die Teile durch eine Flanschverbindung miteinander verbunden sind.

8. Kühlsternwender nach einem der Ansprüche 1-7, **dadurch gekennzeichnet, dass** ein oder mehrere Sektormodule (2) in einem auf dem Seeweg beförderten ISO-Container einer standardisierten Größe transportierbar sind.

9. Kühlsternwender nach Anspruch 8, **dadurch gekennzeichnet, dass** die Sektormodule (2) zum Anpassen des Transportraums teilweise ineinander verschachtelt in einem auf dem Seeweg beförderten ISO-Container installierbar sind.

10. Verfahren zum Installieren von Sektormodulen eines Kühlstemwenders nach Anspruch 1, **dadurch gekennzeichnet, dass** die Sektorteile durch Schraubverbindungen an der Installationsstelle an dem Mittelrohr (1) befestigt sind.

11. Verfahren zum Installieren von Sektormodulen eines Kühlstemwenders nach Anspruch 1, **dadurch gekennzeichnet, dass** die Sektorteile durch Schweißen an der Installationsstelle an dem Mittelrohr (1) befestigt sind.

## Revendications

1. Tourneur de refroidissement pour refroidir des planches ou des piles de planches à base de bois, lequel tourneur de refroidissement comprend un tube central rotatif (1), des brides fixées à celui-ci et également des lames de support (3) fixées aux brides pour supporter les planches (4) ou les piles de planches pendant le refroidissement, dans lequel chaque bride est formée d'au moins trois parties de secteur, et les parties de secteur sont fixées au tube central (1), dans lequel deux parties de secteur ou plus qui sont consécutives dans la direction longitudinale du tourneur de refroidissement sont formées en un module de secteur (2), et des parties de secteur d'un module de secteur (2) sont raccordées les unes aux autres par une ou plusieurs tiges (7).

2. Tourneur de refroidissement selon la revendication 1, **caractérisé en ce qu'**il y a 4 à 16 parties de secteur dans un module de secteur (2).

3. Tourneur de refroidissement selon la revendication 1, **caractérisé en ce que** les parties de secteur sont raccordées les unes aux autres par deux tiges (7) qui sont parallèles l'une à l'autre.

4. Tourneur de refroidissement selon l'une quelconque des revendications 1 à 3, **caractérisé en ce que** chaque bride est divisée en six secteurs, auquel cas chaque secteur s'étend sur environ 60° de la circonférence de la bride.

5. Tourneur de refroidissement selon l'une quelconque des revendications 1 à 4, **caractérisé en ce que** le tube central est formé de deux parties raccordables dans la direction longitudinale.

6. Tourneur de refroidissement selon la revendication 5, **caractérisé en ce que** les parties raccordables sont de longueurs différentes.

7. Tourneur de refroidissement selon la revendication 3 ou 6, **caractérisé en ce que** les parties sont raccordées conjointement avec un joint à bride.

8. Tourneur de refroidissement selon l'une quelconque des revendications 1 à 7, **caractérisé en ce qu'**un ou plusieurs modules de secteur (2) sont transportables dans un conteneur intermodal maritime de taille standard.

9. Tourneur de refroidissement selon la revendication 8, **caractérisé en ce que** les modules de secteur (2) sont installables dans un conteneur intermodal maritime partiellement imbriqués les uns dans les autres pour ajuster l'espace de transport.

10. Procédé d'installation de modules de secteur d'un tourneur de refroidissement selon la revendication 1,
**caractérisé en ce que** les parties de secteur sont fixées au tube central (1) par des raccordements boulonnés au niveau du site d'installation.

11. Procédé d'installation de modules de secteur d'un tourneur de refroidissement selon la revendication 1,
**caractérisé en ce que** les parties de secteur sont fixées au tube central (1) par soudage au niveau du site d'installation.
